# EUROPEAN PATENT SPECIFICATION

(11) **EP 3 233 385 B1**
(45) Date of publication and mention of the grant of the patent: **21.11.2018**
(21) Application number: 15826138.8
(22) Date of filing: 07.12.2015
(51) Int. Cl.: B25F 5/00

(54) **AN EMERGENCY STOP DEVICE FOR A POWER TOOL, AN ELECTRICAL POWER PACK, A POWER TOOL, SYSTEM AND METHOD**
NOTABSCHALTVORRICHTUNG FÜR EIN ELEKTROWERKZEUG, AKKUPACK, ELEKTROWERKZEUG, SYSTEM UND VERFAHREN
DISPOSITIF D'ARRÊT D'URGENCE POUR OUTIL ÉLECTRIQUE, BLOC-BATTERIE, OUTIL ÉLECTRIQUE, SYSTÈME ET PROCÉDÉ

(30) Priority: 19.12.2014 SE 1451621
(43) Date of publication of application: 25.10.2017
(73) Proprietor: Atlas Copco Industrial Technique AB, 105 23 Stockholm Sweden (SE)
(72) Inventor: ELSMARK, Karl, Johan, Lars, 13237 Saltsjö-Boo (SE); LARSSON, Carl, Johan, 18433 Åkersberga (SE); STAHRE, Niklas, 11847 Stockholm (SE)
(74) Representative: Tholin, Thomas
(86) International application number: PCT/EP2015/078757
(87) International publication number: WO 2016/096494

(56) References cited:
- EP-A2- 2 003 761
- WO-A2-2013/131588
- DE-U1-202014 008 083

## Description

### Technical field

The present invention relates to an emergency stop device for a power tool, an electrical power pack, a power tool, a system, and a method of performing emergency stop.

### Background art

In applications where human and machine safety is required, emergency stop systems are used to provide a safe and quick disconnection of power in emergency situations. Examples therefore can be found in WO 2013/131588.

For example, in fixtured power tools, such as spindle tools used in industrial assembly systems, the spindles are connected to a common emergency stop bus circuit configured to transmit an emergency stop signal through the circuit, such that the respective spindles performs an emergency stop.

Fixtured tools are commonly connected to electrical mains to be able to supply electric energy with high peak power. However with the development of supercapacitors and other high power chargeable battery assemblies it may be desirable to power such power tools with power packs. Such power packs are either used stand-alone, or connected to electrical mains for continuous or intermittent charging.

In order to perform an emergency stop of a common fixtured power tool connected to the electrical mains by power cables, the mains power is typically shut down. In such an event the power to the tool is immediately disconnected. However, this would not be effective for a power tool having a power pack providing power, irrespectively if it is stand-alone or connected to electrical mains for charging. The amount of energy available in the power pack would still be able to power the tool for an amount of time. Thus there is a need for provide a safe and quick disconnection of power in emergency situations for such tools.

### Summary of the invention

An object of the present invention is to further improve the safety of machines and humans in assembly stations where a multitude of power tools are used. One object is to improve the safety in assembly stations where power tools powered by power packs are used.

Thus the invention relates to an emergency stop device for a power tool comprising an electrical power contact for releasably connecting a power source to the power tool, and an emergency stop circuit connected to the electrical power contact. The emergency stop circuit is configured to disconnect the electrical contact from the electrical power source upon receipt of an emergency stop signal by the emergency stop circuit.

By connecting such an emergency stop device to a power tool powered by a power pack, the tool may be used in e.g. an assembly station in combination with other machines and power tools. The power tool may then be connected to a common emergency stop bus circuit, to deactivate the power tool upon an emergency stop event.

The device may comprise at least one relay, wherein the emergency stop circuit may control at least one relay for disconnecting the electrical contact means from the electrical power source upon receipt of an emergency stop signal.

The device preferably comprises a negative and a positive power contact means, and wherein the device comprises at least a first relay for disconnecting the positive electrical contact means from the electrical power source and a second relay for disconnecting the negative electrical contact means from the electrical power source.

Thus electrical power may be physically disconnected upon an emergency stop event, and thus the security level of power disconnection during the emergency stop is increased.

The emergency stop device may comprise a wireless communication device for receiving the emergency stop signal. Thus the handling and positioning of the power tool may be facilitated and the portability of the tool is not limited by the added functionality. Alternatively the emergency stop device may comprise a communication circuit for receiving an emergency stop signal over wire.

The invention further relates to an electrical power pack for a power tool in the form of an integrated unit comprising an electrical power source, and an emergency stop device as disclosed herein integrated in the power pack.

Thus the power pack may simply replace existing power packs of a power tool in order to provide for emergency stop functionality and to connect the tool to an emergency stop system.

The emergency stop device may alternatively be in the form of a separate unit connectable to an electrical power source, wherein the electrical power source may be a separate power pack for the power tool.

Thus the emergency stop may be used together with existing power packs of a power tool to provide for added emergency stop functionality.

The emergency stop device may comprise identification data which may be obtained by the power tool or power pack. Thus the power tool may be configured to read out the identity of the power pack and/or the emergency stop circuit connected to the tool, to pair its operation to the identified power pack and emergency stop circuit and to prevent operation if the identity of the power pack and/or emergency stop circuit deviates from the paired condition, or is missing. Operation may be prevented by not acknowledging to a common emergency stop bus circuit that the required tool is ready for operation.

The invention further relates to a power tool comprising a tool drive unit and an electrical power pack or emergency stop device as disclosed herein, connected to the power tool for powering the tool drive unit, wherein electrical power from the power pack is disconnected upon receipt of an emergency stop signal.

The power tool may be a fixtured power tool, i.e. mounted in a fixture in an assembly station, e.g. together with one or more power tools or spindles. Alternatively the power tool may be a portable power tool, e.g. a cordless hand held tool, which possibly may be supported or weight balanced to improve ergonomics of the operator.

The invention further relates to a system comprising a plurality of power tools with a separate electrical power pack and emergency stop device as disclosed herein, and wherein the plurality of power tools are connected to a common emergency stop bus circuit such that, when an emergency stop signal is transmitted through the common emergency stop bus circuit, each power tool connected to the bus initiates an emergency stop.

Thus any power tool powered by such a power pack or emergency stop device may be used in e.g. an assembly station in combination with other machines and power tools, connected to a common emergency stop bus circuit, and thus deactivating the power tool and any other power tool in the system upon an emergency stop event.

Each power tool of the plurality of power tools in the system may include a separate power pack and a charging connection for continuously charging each separate power pack. The charging connection may be of a low voltage type and does not have to be adapted to provide any peak currencies. Instead the charging connection is adapted to continuously charge the independent power packs, such that the power packs are charged so as to be able to provide peak currencies when needed. The fact of only needing a relatively small charging connection instead of cables able to provide peak currencies to each power tool simultaneously radically reduces the need of cables and hence facilitates implementation of the system.

The power tool with an electrical power pack or emergency stop device as disclosed herein may be configured to send an acknowledgement signal to the common emergency stop bus circuit to indicate that the power tool is operable and emergency stoppable such that the system may be deemed operable and emergency stoppable.

The plurality of power tools may comprise a fixture of power tools, e.g. in an assembly station.

The emergency stop signal may be transmitted over wire or wirelessly.

The system may comprise emergency stop buttons and/or sensors which are configured to indicate a fault condition, communicating with the common emergency stop bus circuit.

The invention further relates to a method of performing emergency stop of a power tool with an electrical power pack as disclosed herein, comprising, upon receipt of an emergency stop signal by the emergency stop circuit, disconnecting the electrical power source in the electrical power pack from the electrical power contact means of the power pack, thereby performing an emergency stop of the power tool.

### Brief description of drawings

The invention is now described, by way of example, with reference to the accompanying drawings, in which:
Fig. 1 shows a power tool and a power pack for a power tool, according to an embodiment of the invention.
Fig. 2 shows a power tool with a power pack and an emergency stop device according to another embodiment of the invention.
Fig. 3 shows a power tool and a power pack for a power tool, according to a further embodiment of the invention.

### Description of embodiments

In the following, a detailed description of an electrical power pack and a power tool according to embodiments of the invention is presented.

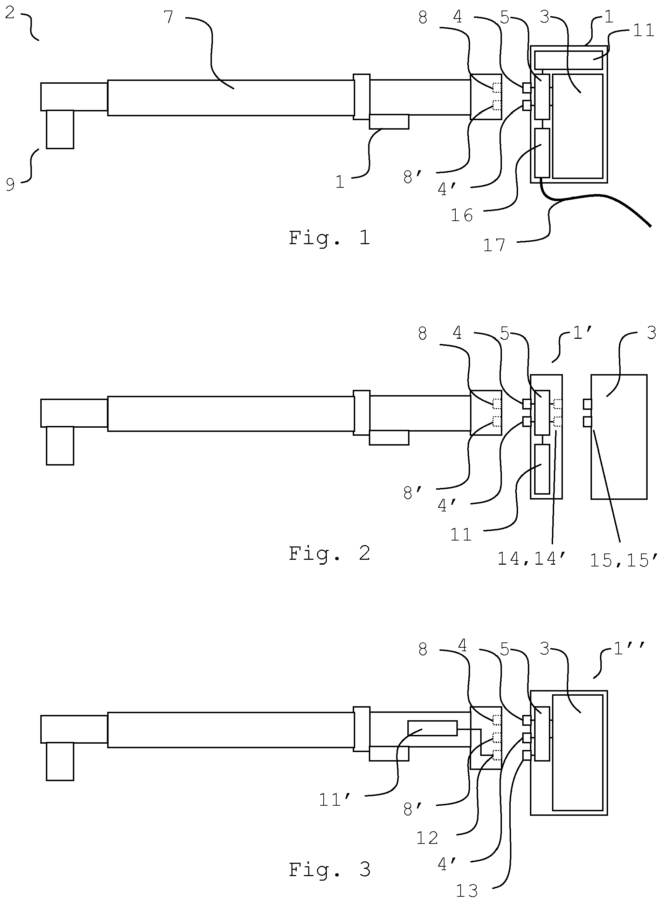

In Fig. 1 an emergency stop device 1 in the form of an electrical power pack is shown, for connection to a power tool 2. The power tool is shown with the power pack physically disconnected but they form a physically connected unit during operation of the power tool. The power tool is shown as a nutrunner for tightening nuts in an assembly station, but screwdrivers, drilling tools, cutting tools, grinding tools, riveting tools, routing or sanding tools and the like are equally well suitable.

The power tool comprises a body comprising a drive unit 7, e.g. a rotating electrical motor for driving a rotatable tool head 9 of the power tool. The power tool may be controlled by an actuation means, e.g. in the form of a pistol grip 10 to control the actuation of the drive unit. Alternatively the tool is remotely actuated. The body of the power tool comprises electrical contacts in the form of a negative 8 and a positive 8' electrical contact for receiving electrical power from the power pack 1.

The electrical power pack 1 forms an integral unit that is connectable to the power tool. It comprises an electrical power source such that in the form of a chargeable battery or a supercapacitor. The interface for connecting the power pack to the main body of the power tool comprises a negative 4 and a positive 4' electrical contact for connecting the power source to the power tool. Optionally, the power pack may be connected to electrical mains for continuous or intermittent charging, via charging circuit 16 and cable 17.

The power pack comprises an emergency stop circuit 5 that comprises means for disconnecting the electrical contacts from the electrical power source upon receipt of an emergency stop signal, in the form of a set of relays physically disconnecting the negative 4 and the positive 4' electrical contacts from the power source. The power pack further comprises a communication circuit for receiving an emergency stop signal from an external control unit. The communication circuit may be a wireless communication circuit for receiving an emergency stop signal over a wireless communication network, or connected to an emergency stop bus circuit via the cable 17. The emergency stop circuit is configured to open the relays and thus physically disconnect the electrical contacts from the power source upon receipt of an emergency stop signal from the communication circuit.

During operation of the power tool, the drive unit of the tool is actuated, e.g. to fasten a fastener such as a nut. The drive unit is then powered by the power source of the power pack.

However, when an emergency event is detected and the emergency stop circuit receives an emergency stop signal, the emergency stop circuit disconnects the electrical contacts from the power source, thus disconnecting the power to the drive unit of the power tool. Thereby the power to the power tool may be disconnected immediately upon an emergency stop event even for a power tool powered by a power pack.

In Fig. 2 an emergency stop device 1' in the form of a separate unit which is connectable to an existing power pack 3 of a power tool. The emergency stop device comprises electrical contacts 4, 4' for connection to electrical contacts 8, 8' on the body of the power tool, and electrical contacts 14, 14' for connection to electrical contacts 15, 15' of the existing power pack 3 of the tool. Thus the emergency stop device forms a separate unit 1' placed, electrically and mechanically, between the power pack 3 and the power tool. The emergency stop device 1' comprises an emergency stop circuit 5 and a communication circuit 11 as described in relation to Fig. 1. The advantage of this solution is that existing pairs of power tools and power packs may be provided with the additional emergency stop functionality. The power tool may be configured to read out the identity of the power pack and the emergency stop circuit connected to the tool, to pair its operation to the identified power pack and the emergency stop circuit and to prevent operation if the identity of the power pack and/or emergency stop circuit deviates from the paired condition, or is missing.

Fig. 3 shows an emergency stop device 1" in the form of an electrical power pack, similar to what is described in relation to Fig. 1. The device differs from what is previously described in that a wireless communication circuit 11' is included in the body of the power tool itself and the emergency stop signal received by the emergency stop circuit via a communication interface in the form of a pair of contacts 12, 13 between the power tool and the power pack. Thereby the emergency stop device does not need to include a wireless communication circuit in each device, but may use the wireless communication circuit in the power tool.

Typically a power tool as disclosed herein is used in a system comprising a plurality of power tools, such as in a fixture comprising one or more fixtured tools or spindles. The power tools of the system are connected to a common emergency stop bus circuit. Throughout this bus circuit, emergency stop signals may be transmitted upon an emergency stop event, such that each power tool connected to the bus initiates an emergency stop. The system typically comprises one or more emergency stop buttons and/or sensors which are configured to indicate a fault condition, communicating with the common emergency stop bus circuit. Thereby, upon actuation of the one or more emergency stop buttons and/or indication of a fault condition by the sensors, an emergency stop signal is transmitted through the bus circuit to stop all tools and other machines connected to the common emergency stop bus circuit.

## Claims

1. An emergency stop device (1, 1', 1") for a power tool comprising an electrical power contact (4, 4') for releasably connecting a power source (3) to the power tool, and
an emergency stop circuit (5) connected to the electrical power contact and configured to disconnect the electrical contact (4, 4') from the electrical power source (3) upon receipt of an emergency stop signal by the emergency stop circuit (5), **characterised in that** the emergency stop device comprises a negative (4) and a positive (4') electrical power contact, and wherein the device comprises at least a first relay for disconnecting the positive electrical contact from the electrical power source and a second relay for disconnecting the negative electrical contact from the electrical power source.

2. The emergency stop device according to claim 1 comprising a wireless communication device for receiving the emergency stop signal.

3. The emergency stop device (1') according to any one of claims 1 or 2 in the form of a separate unit connectable to an electrical power source.

4. The emergency stop device according to claim 3 wherein the electrical power source is a separate power pack for the power tool.

5. An electrical power pack (1, 1") for a power tool (2) in the form of an integrated unit comprising an electrical power source (3), and an emergency stop device according to any one of claims 1 or 2 integrated in the power pack.

6. A power tool comprising a tool drive unit and an emergency stop device according to anyone of the claims 1-4, or an electrical power pack according claim 5, wherein the power pack is connected to the power tool for powering the tool drive unit, and wherein electrical power from the power pack is disconnected upon receipt of an emergency stop signal.

7. A system comprising a plurality of power tools according to claim 6, and wherein the plurality of power tools are connected to a common emergency stop bus circuit such that, when an emergency stop signal is transmitted through the common emergency stop bus circuit, each power tool connected to the bus initiates an emergency stop.

8. The system according to claim 7 comprising emergency stop buttons and/or sensors which are configured to indicate a fault condition, communicating with the common emergency stop bus circuit.

9. The system according to either of claims 7 or 8, wherein each power tool of the plurality of power tools include a separate power pack and a charging connection for continuously charging each separate power pack.

10. Method of performing an emergency stop of a power tool according to claim 6, comprising the step of, upon receipt of an emergency stop signal by the emergency stop circuit, disconnecting the electrical power source from the electrical power contact means, thereby performing an emergency stop of the power tool.

## Patentansprüche

1. Notausschaltvorrichtung (1, 1', 1") für ein Elektrowerkzeug, umfassend einen elektrischen Leistungskontakt (4, 4'), um eine Leistungsquelle (3) lösbar mit dem Elektrowerkzeug zu verbinden, und
einen Notausschaltkreis (5), der mit dem elektrischen Leistungskontakt verbunden ist und konfiguriert ist, um den elektrischen Kontakt (4, 4') von der elektrischen Leistungsquelle (3) nach Empfang eines Notausschaltsignals durch den Notausschaltkreis (5) zu trennen, **dadurch gekennzeichnet, dass** die Notausschaltvorrichtung einen negativen (4) und einen positiven (4') elektrischen Leistungskontakt umfasst, und wobei die Vorrichtung mindestens ein erstes Relais zum Trennen des positiven elektrischen Kontakts von der elektrischen Leistungsquelle und ein zweites Relais zum Trennen des negativen elektrischen Kontakts von der elektrischen Leistungsquelle umfasst.

2. Notausschaltvorrichtung nach Anspruch 1, umfassend eine drahtlose Kommunikationsvorrichtung zum Empfangen des Notausschaltsignals.

3. Notausschaltvorrichtung (1') nach einem der Ansprüche 1 oder 2 in Form einer getrennten Einheit, die mit einer elektrischen Leistungsquelle verbunden werden kann.

4. Notausschaltvorrichtung nach Anspruch 3, wobei die elektrische Leistungsquelle ein getrenntes Netzteil für das Elektrowerkzeug ist.

5. Elektrisches Netzteil (1, 1") für ein Elektrowerkzeug (2) in Form einer integrierten Einheit, die eine elektrische Leistungsquelle (3) umfasst, und Notausschaltvorrichtung nach einem der Ansprüche 1 oder 2, die in dem Netzteil integriert ist.

6. Elektrowerkzeug, umfassend eine Werkzeugantriebseinheit und eine Notausschaltvorrichtung nach einem der Ansprüche 1-4, oder ein elektrisches Netzteil nach Anspruch 5, wobei das Netzteil mit dem Elektrowerkzeug zur Versorgung der Werkzeugantriebseinheit verbunden ist und wobei elektrische Leistung von dem Netzteil nach Empfangen eines Notausschaltsignals abgeschaltet wird.

7. System, umfassend eine Vielzahl von Elektrowerkzeugen nach Anspruch 6, und vorbei die Vielzahl von Elektrowerkzeugen mit einer gemeinsamen Notausschaltbusschaltung verbunden ist, sodass, wenn ein Notausschaltsignal durch die gemeinsame Notausschaltbusschaltung übertragen wird, jedes Werkzeug, das mit dem Bus verbunden ist, eine Notausschaltung initiiert.

8. System nach Anspruch 7, umfassend Notausschalttasten und/oder -sensoren, die konfiguriert sind, um einen Fehlerzustand anzuzeigen, die mit der gemeinsamen Notausschaltbusschaltung kommunizieren.

9. System nach einem der Ansprüche 7 oder 8, wobei jedes Elektrowerkzeug der Vielzahl von Elektrowerkzeugen ein getrenntes Netzteil und eine Ladeverbindung zum kontinuierlichen Laden jedes getrennten Netzteils beinhaltet.

10. Verfahren zum Durchführen einer Notausschaltung eines Elektrowerkzeugs nach Anspruch 6, umfassend den Schritt, nach Empfangen eines Notausschaltsignals durch die Notausschaltung, des Trennens der elektrischen Leistungsquelle von dem elektrischen Leistungskontaktmittel, sodass eine Notausschaltung des Elektrowerkzeugs durchgeführt wird.

## Revendications

1. Dispositif d'arrêt d'urgence (1, 1', 1") pour un outil électrique comprenant un contact d'alimentation électrique (4, 4') pour relier de manière libérable une source d'alimentation (3) à l'outil électrique, et
un circuit d'arrêt d'urgence (5) relié au contact d'alimentation électrique et configuré pour déconnecter le contact électrique (4, 4') vis-à-vis de la source d'alimentation électrique (3) à réception d'un signal d'arrêt d'urgence par le circuit d'arrêt d'urgence (5), **caractérisé par le fait que** le dispositif d'arrêt d'urgence comprend des contacts d'alimentation électrique négatif (4) et positif (4'), et le dispositif comprenant au moins un premier relais pour déconnecter le contact électrique positif vis-à-vis de la source d'alimentation électrique et un second relais pour déconnecter le contact électrique négatif vis-à-vis de la source d'alimentation électrique.

2. Dispositif d'arrêt d'urgence selon la revendication 1, comprenant un dispositif de communication sans fil pour recevoir le signal d'arrêt d'urgence.

3. Dispositif d'arrêt d'urgence (1') selon l'une quelconque des revendications 1 ou 2 sous la forme d'une unité distincte apte à être reliée à une source d'alimentation électrique.

4. Dispositif d'arrêt d'urgence selon la revendication 3, dans lequel la source d'alimentation électrique est un bloc d'alimentation distinct pour l'outil électrique.

5. Bloc d'alimentation (1, 1") pour un outil électrique (2) sous la forme d'une unité intégrée comprenant une source d'alimentation électrique (3), et un dispositif d'arrêt d'urgence selon l'une quelconque des revendications 1 ou 2 intégré dans le bloc d'alimentation.

6. Outil électrique comprenant une unité d'entraînement d'outil et un dispositif d'arrêt d'urgence selon l'une quelconque des revendications 1 à 4, ou un bloc d'alimentation selon la revendication 5, le bloc d'alimentation étant relié à l'outil électrique pour alimenter l'unité d'entraînement d'outil, et l'alimentation électrique du bloc d'alimentation étant déconnectée à réception d'un signal d'arrêt d'urgence.

7. Système comprenant une pluralité d'outils électriques selon la revendication 6, et la pluralité d'outils électriques étant reliés à un circuit de bus d'arrêt d'urgence commun de telle sorte que, lorsqu'un signal d'arrêt d'urgence est émis par l'intermédiaire du circuit de bus d'arrêt d'urgence commun, chaque outil électrique relié au bus initie un arrêt d'urgence.

8. Système selon la revendication 7, comprenant des boutons et/ou capteurs d'arrêt d'urgence qui sont configurés pour indiquer un état de défaillance, communiquant avec le circuit de bus d'arrêt d'urgence commun.

9. Système selon l'une des revendications 7 ou 8, dans lequel chaque outil électrique parmi la pluralité d'outils électriques comprend un bloc d'alimentation distinct et une connexion de charge pour charger de manière continue chaque bloc d'alimentation distinct.

10. Procédé pour réaliser un arrêt d'urgence d'un outil électrique selon la revendication 6, comprenant l'étape, à réception d'un signal d'arrêt d'urgence par le circuit d'arrêt d'urgence, de déconnexion de la source d'alimentation électrique vis-à-vis du moyen de contact d'alimentation électrique, réalisant ainsi un arrêt d'urgence de l'outil électrique.
